# EUROPEAN PATENT APPLICATION

(11) **EP 4 628 368 A1**
(43) Date of publication of application: **08.10.2025**
(21) Application number: 24382350.7
(22) Date of filing: 05.04.2024
(51) Int. Cl.: B60R 21/045

(54) **SHOCK ABSORPTION DEVICE AND DASHBOARD OF A VEHICLE**

(71) Applicant: Seat, S.A., 08760 Martorell - Barcelona (ES)
(72) Inventor: ZÁRATE GALVÁN, Ángel Víctor, 08760 Barcelona (ES); MONTESINOS ACOSTA, Salvador Juan, 08760 Barcelona (ES); MUÑOZ TORRES, Manuela, 08760 Barcelona (ES); MARTÍNEZ ORIOL, Amor, 08760 Barcelona (ES)
(74) Representative: Elzaburu S.L.P.

(57) **Abstract**

The present invention relates to a shock absorption device (100) comprising at least two bodies (101) with a substantially frustoconical geometry, wherein said bodies (101) are configured to be arranged in correspondence with a plate (200) located under a liner of the dashboard of a vehicle, projecting perpendicular to said plate (200).

## Description

### Object of the invention

The object of the present invention is a shock absorption device, especially designed for incorporation under the cover of the dashboard of a vehicle, in correspondence with the driver's and/or co-pilot's seat.

The shock absorption device object of the present invention is especially designed to absorb the energy of the impacts of the knee of an occupant of the vehicle with the dashboard, in the event of a sudden deceleration of the vehicle due to a frontal collision.

The present invention also relates to a dashboard of a vehicle that incorporates a shock absorption device that allows the energy of the impact of the knees of the occupant of a vehicle to be absorbed, in the event of a sudden deceleration of the vehicle due to a frontal collision.

The shock absorption device and the dashboard of a vehicle, objects of the present invention, have special application in the field of the industry dedicated to the design and manufacture of motor vehicles.

### Background of the invention and technical problem to be solved

When a traffic accident and/or a frontal collision of a motor vehicle against an object occurs, the occupants of the front seats of the vehicle are projected in the direction of travel of the vehicle at high speed.

Despite safety systems such as seat belts and airbags, the legs of the occupants of the front seats can forcefully hit the dashboard of the vehicle.

According to the simulations carried out using dummies, it is observed (for a dummy of a size comparable to 95% of the population) that the knee impacts with the lining of the dashboard, then with the internal components and finally with a solid hard element, which inflicts accelerations and forces on the femur that, according to values obtained experimentally, can exceed 5 kN. This value is only indicative since it depends on many factors, such as the size of the person, the driving position, the geometry of the dashboard, among others. On the contrary, these force values should be less than 4 kN, in order for the occupant of the front seats of the vehicle to not sustain the notable injuries.

To mitigate said accelerations and stresses on the knee, airbags or airbag systems arranged in the lower area of the dashboard are known, configured to inflate and contact the knee of the occupant in the event of said frontal collisions. Said knee airbags are expensive devices and do not provide the expected results, especially when the inflation time before impact with the knee is low, for example when the person is driving very close to the steering wheel, or for occupants of a size similar to 95% of the population.

The situation described above causes people occupying the front seats of a vehicle, in the event of a frontal collision, to suffer injuries to their knees despite the existence of conventional safety systems such as occupant restraint systems, for example the seat belt) or energy absorbing systems, for example the steering wheel airbag or the knee airbag.

### Description of the invention

In order to solve the aforementioned drawbacks, the present invention relates to a shock absorption device.

The shock absorption device object of the present invention comprises at least one body with a substantially frustoconical geometry.

In a novel way, the at least one body comprises a first end and a second end spaced from the first end by a conical surface of said body, the at least one body being configured to deform by compression, causing the distance that separates the first end from the second end to be reduced.

By means of the arrangement described above, the at least one body of the device can be deformed by compression, absorbing the impact energy of an external mass that possibly impacts against the at least one body of the device (for example, an impact of the knees of an occupant of the vehicle against the device, impact due to a sudden deceleration of the vehicle or a frontal collision of the vehicle against another object).

Preferably, the first end of the at least one body of the device has a circular straight cross section, and the second end has an elliptical straight cross section.

By means of the geometry of the straight cross sections of the frustoconical body (cross sections according to a plane perpendicular to the axis of revolution of each frustoconical body) described in the previous paragraph, it is possible to favour a certain deformation dynamic of the device of the invention, maximising the energy absorption capacity in the event of an impact of an external mass against the device (for example, an impact of the knees of an occupant of the vehicle against the device, impact due to a sudden deceleration of the vehicle or a frontal collision of the vehicle against another object).

Preferably, the first end of the at least one body of the device is configured to receive an external force (the external mass such as, for example, the knees of the occupant of the vehicle), such that it causes the movement of the respective body.

Preferably, the second end is configured to contact a rigid element (for example, a rigid structural element located on the dashboard), such that deformation by compression of the respective body is initiated.

The contact between the second end and the rigid element occurs, preferably, initially in one of the two halves of the straight ellipse-shaped cross section of said second end, such that an approximation occurs between the two halves of said straight ellipse-shaped section of the second end.

In addition to the distance that separates the first end from the second end being reduced, the at least one body is preferably configured to deform by compression, causing a first cross section of the conical surface to move closer to a second section of said conical surface, opposite the first cross section.

Although the frustoconical body comprises a continuous conical surface, to facilitate the understanding of the present invention, a distinction is made between the first cross section of the conical surface and the second cross section of said conical surface. Thus, an axis of symmetry of the body is defined according to the major axis of the ellipse, on which said first and second cross sections of the conical surface are defined.

The at least one body of the device is preferably configured to, after the approximation between the two halves of said straight ellipse-shaped cross section of the second end, be compressed by buckling of said first cross section of the conical surface of said body. Thus, the cross section of the conical surface that has not received contact with the rigid element is compressed by buckling. Continuing with the described embodiment, the second cross section of the conical surface is the one that has received contact with the rigid element and the first cross section of the conical surface is the one that is compressed by buckling.

Preferably, the at least one body of the device is configured to deform such that a crushing of the second cross section of said conical surface against the first cross section of the conical surface occurs.

Preferably, the at least one body of the device, with a frustoconical geometry, defines an axis of revolution, said axis of revolution being arranged secantly with respect to the direction of application of the compression force applied between the first end and the second end.

Thus, by means of the specific arrangement of the body with respect to the rigid element described in the previous paragraphs, optimal deformation and energy absorption are achieved.

The at least one body of the device is preferably hollow, favouring said specific kinematics set out in the previous paragraphs.

Also preferably, the at least one body of the device is manufactured from plastic material.

According to a second aspect, the present invention also relates to a dashboard of a vehicle comprising a shock absorption device as described above.

Thus, preferably, in the dashboard of a vehicle, object of the present invention, the first end of the at least one body of the device is configured to be arranged in correspondence with a plate located on an interior surface of a lining of said dashboard, projecting substantially perpendicular to said plate.

Preferably, the at least one body is manufactured using a process of injecting a plastic material in a single piece together with the plate.

Also preferably, the dashboard of a vehicle, object of the present invention, comprises a plurality of bodies with a substantially frustoconical geometry capable of being impacted by a knee of an occupant of the front seats of the vehicle.

### Brief description of the figures

The following figures have been included as part of the explanation of at least one embodiment of the invention.
Figure 1 shows a schematic perspective view of a possible embodiment of the shock absorption device object of the present invention.
Figure 2 shows a schematic side view and a schematic plan view in a situation without application of external forces and, therefore, without deformation, of a possible embodiment of the shock absorption device object of the present invention.
Figure 3a shows a schematic side view and a schematic plan view of a first deformation phase of the shock absorption device of Figure 2.
Figure 3b shows a schematic side view and a schematic plan view of an intermediate deformation phase of the shock absorption device of Figure 2.
Figure 3c shows a schematic side view and a deformed schematic plan view of a final deformation phase of the shock absorption device of Figure 2.
Figure 4a shows a schematic perspective view of the first deformation phase of the shock absorption device corresponding to Figure 3A, arranged on an interior surface of a dashboard.
Figure 4b shows a schematic perspective view of the intermediate deformation phase of the shock absorption device corresponding to Figure 3b, arranged on an interior surface of a dashboard.
Figure 4c shows a schematic perspective view of the final deformation phase of the shock absorption device corresponding to Figure 3c, arranged on an interior surface of a dashboard.

### Detailed description

As mentioned above, the present invention relates to a shock absorption device (100).

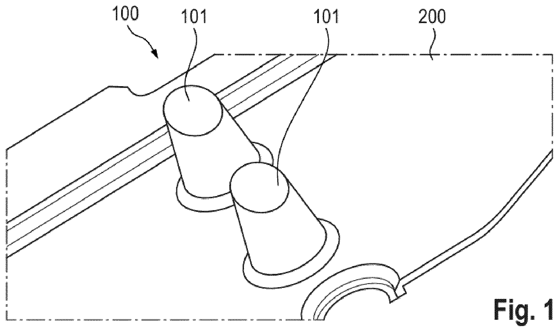

As can be seen in Figure 1, the device (100) comprises at least one body (101) with an approximately frustoconical geometry. In the specific exemplary embodiment shown in said Figure 1, three bodies (101) are represented, one of them not represented in order to show that the structure of said bodies (101) is hollow, as will be explained in greater detail below.

These bodies (101) project from a plate (200) located under the lining of the dashboard of a vehicle, on an interior and unseen surface of said dashboard. The bodies (101) project from the plate (200), perpendicular to the plate (200) and in the direction towards the upper and front portion of the vehicle (according to the direction of travel of the vehicle).

At a first end (101a) in contact with the plate (200), each of the two bodies (101) comprises a geometry with a circular straight cross section.

At a second end (101b) further away from the plate (200), each of the two bodies (101) ends in a geometry cross section with an elliptical straight cross section.

In this way, the approximately frustoconical geometry of each of the bodies (101) evolves from a circular cross section in correspondence with the first end (101a) closest to the plate (200) to an elliptical cross section in correspondence with the second end (101b) further away from the plate (200).

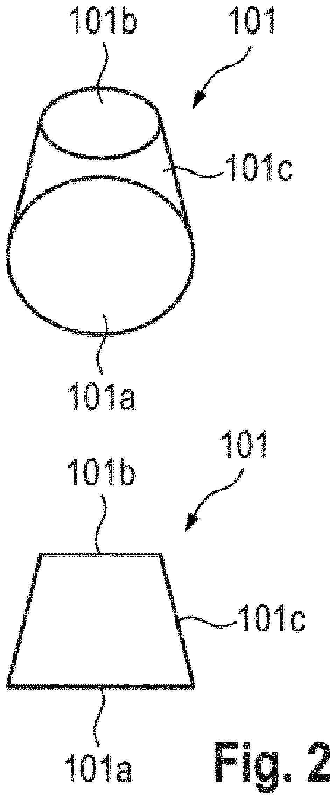

In the lower part of Figure 2, a side view of one of the bodies (101) can be seen schematically, and in the upper part of Figure 2, a top view of said body (101) can be seen, with the body (101) represented without application of any external force and, therefore, without deformation. In addition, the circular geometry of the first end (101a) and the elliptical geometry of the second end (101b) can be seen, and the conical surface (101c) of said body (101) can also be seen.

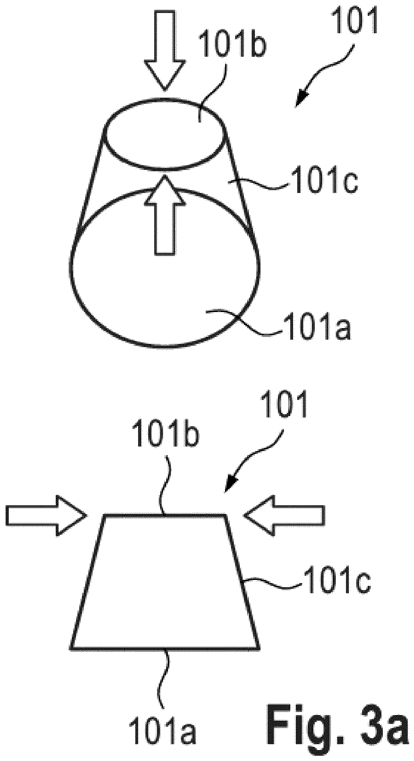

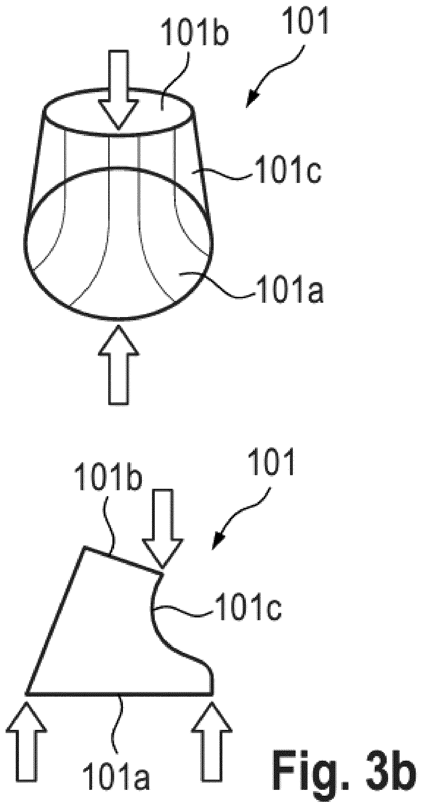

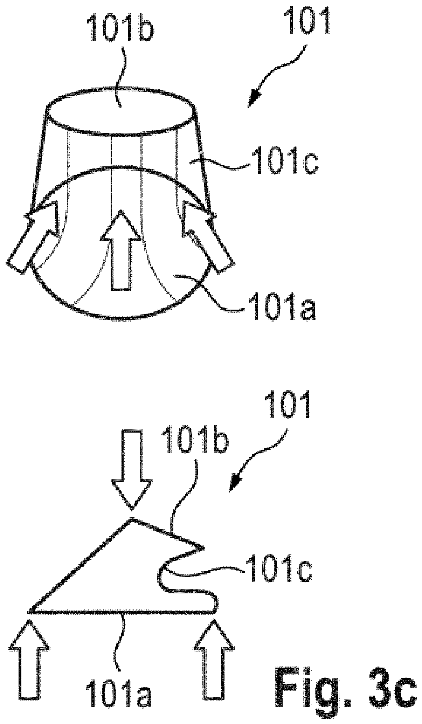

Figure 3a, Figure 3b and Figure 3c also schematically show, in their lower part, a side view of one of the two bodies (101) of the device (100) and, in their upper part, a top view of said body (101) of the device (100), in a manner similar to that shown in Figure 2, but in successive stages of deformation of the device (100) when the impact of an external mass against the device (100) occurs.

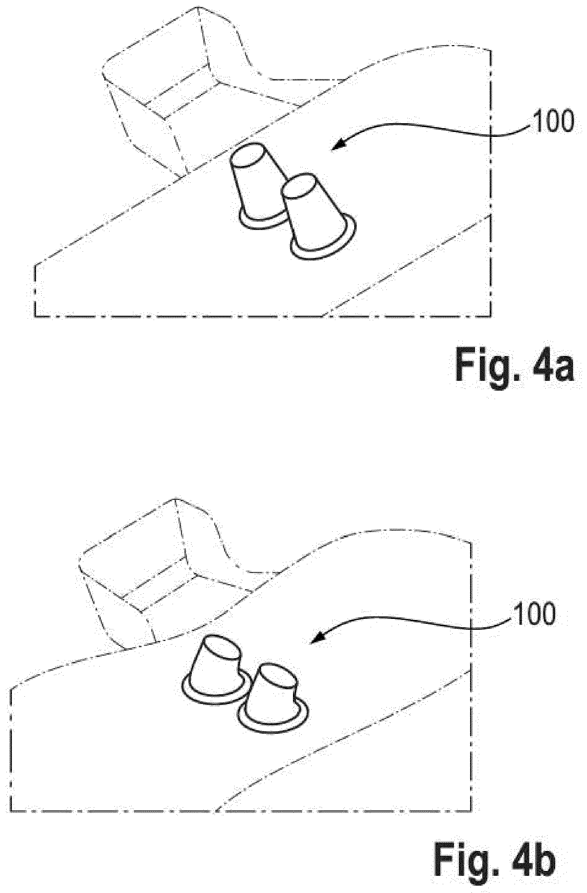

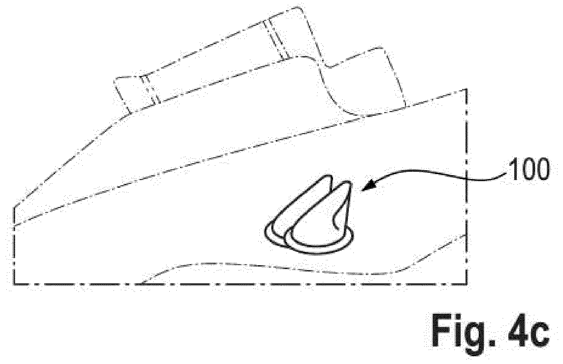

The frustoconical geometry of each of the bodies (101) of the device (100), with its geometry with a circular straight cross section at the first end (101a) and its geometry with an elliptical straight cross section at its second end (101b) favours a deformation dynamic of the device (100) (in the event of impact of an external mass against the device, for example, in the event of impact of the knees of the driver or co-pilot of the vehicle against the device (100)) according to which:
- in a first deformation stage, only the second end (101b) of each of the bodies (101) is deformed, flattening the ellipses of said second end (101b). Thus, if a division of said second end (101b) is conceptually carried out in the shape of an ellipse through its major axis, two halves of said ellipse are obtained. It is intended that the contact with the rigid external mass initially occurs with only one of said two halves of the ellipse, said flattening occurring between said two halves of the ellipse. Figure 3a and Figure 4a schematically show this first deformation stage of the device, where the deformation forces acting on the device (100) are shown by arrows;
- subsequently, in a second deformation stage, as the duration and energy of the impact of the mass (e.g., the knees of the occupant of the vehicle) against the device (100) increases, the second end (101b) of each of the bodies (101) begins to tilt with respect to the plate (200), approaching the plate (200) through one of the contours of the second end (101b). The conical surface (101c) located in correspondence with the contour of the second end (101b) closest to the plate (200), or of said half of the ellipse not directly contacted by the rigid external mass, is compressed and warped. Figure 3b and Figure 4b schematically show this second deformation stage of the device, where the deformation forces acting on the device (100) are shown by arrows;
- lastly, in a third and final deformation stage, as the duration and energy of the impact of the mass (e.g., the knees of the occupant of the vehicle) against the device (100) continues to increase, the crushing of the each of the two bodies (101) occurs against the plate (200). Figure 3c and Figure 4c schematically show this third deformation stage of the device, where the deformation forces acting on the device (100) are shown by arrows.

One of the relevant aspects for said particular deformation to occur is that the axis of rotation of the frustoconical geometry of the body (101) is not perpendicular to the direction of application of the compression forces that act on the first (101a) and second (101b) ends, thereby ensuring that a compression of one of the halves of the conical surface (101c) of said body (101) is applied against the opposite half.

Preferably, each of the bodies (101) is hollow, favouring optical deformation behaviour, but without penalising the weight of the component.

Each of the two bodies (101) of the device (100) is preferably manufactured from plastic material. Preferably, the bodies (101) of the device (100) are manufactured using a plastic injection process, forming a single piece with the plate (200).

## Claims

1. A shock absorption device (100) comprising at least one body (101) with a substantially frustoconical geometry, **characterised in that** said at least one body (101) comprises a first end (101a) and a second end (101b) spaced from the first end (101a) by a conical surface (101c) of said body (101), the at least one body (101) being configured to deform by compression, causing the distance that separates the first end (101a) from the second end (101b) to be reduced.

2. The shock absorption device (100) according to claim 1, **characterised in that** said first end (101a) has a circular straight cross section, and **in that** said second end (101b) has an elliptical straight cross section.

3. The shock absorption device (100) according to any of claims 1 or 2, **characterised in that** the first end (101a) is configured to receive an external force, such that it produces the movement of the respective body (101).

4. The shock absorption device (100) according to claim 3, **characterised in that** the second end (101b) is configured to contact a rigid element, such that the deformation by compression of the respective body (101) is initiated.

5. The shock absorption device (100) according to claim 4, **characterised in that** said contact between the second end (101b) and the rigid element is initially produced in one of the two halves of the straight ellipse-shaped cross section of said second end (101b), such that an approximation occurs between the two halves of said straight ellipse-shaped cross section of the second end (101b).

6. The shock absorption device (100) according to any of the preceding claims, **characterised in that** in addition to the distance that separates the first end (101a) from the second end (101b) being reduced, the at least one body (101) is configured to deform by compression, causing a first cross section of the conical surface (101c) to move closer to a second cross section of said conical surface (101c), opposite the first cross section.

7. The shock absorption device (100) according to claim 6, when it depends on claim 5, **characterised in that** the at least one body (101) is configured to, after the approximation between the two halves of said straight ellipse-shaped cross section of the second end (101b), be compressed by buckling of said first cross section of the conical surface (101c) of said body (101).

8. The shock absorption device (100) according to claim 7, **characterised in that** the at least one body (101) is configured to deform such that a crushing of the second cross section of said conical surface (101c) against the first cross section of the conical surface (101c) occurs.

9. The shock absorption device (100) according to any of the preceding claims, **characterised in that** the at least one body (101) with a frustoconical geometry defines an axis of revolution, said axis of revolution being arranged secantly with respect to the direction of application of the compression force applied between the first end (101a) and the second end (101b).

10. The shock absorption device (100) according to any of the preceding claims, **characterised in that** at least one body (101) is hollow.

11. The shock absorption device (100) according to any of the preceding claims, **characterised in that** the at least one body (101) is manufactured from plastic material.

12. A dashboard of a vehicle, **characterised in that** it comprises an shock absorption device (100) according to any of claims 1 to 11.

13. The dashboard according to claim 12, **characterised in that** the first end (101a) of the at least one body (101) is configured to be arranged in correspondence with a plate (200) located on an interior surface of a lining of said dashboard, projecting substantially perpendicular to said plate (200).

14. The dashboard according to claim 13, **characterised in that** the at least one body (101) is manufactured using a process of injecting a plastic material in a single piece together with the plate (200).

15. The dashboard according to any of claims 13 or 14, **characterised in that** it comprises a plurality of bodies (101) with a substantially frustoconical geometry capable of being impacted by a knee of an occupant of the front seats of the vehicle.
